# DEMANDE DE BREVET EUROPEEN

(11) **EP 0 871 061 A1**
(43) Date de publication de la demande: **14.10.1998**
(21) Numéro de dépôt: 98400862.3
(22) Date de dépôt: 09.04.1998
(51) Int. Cl.: G02F 2/00, H04B 10/17

(54) **Convertisseur de longueur d'onde de signaux optiques binaires**

(30) Priorité: 10.04.1997 FR 9704401
(71) Demandeur: ALCATEL ALSTHOM COMPAGNIE GENERALE D'ELECTRICITE, 75008 Paris (FR)
(72) Inventeur: Leclerc, Denis, 91430 Igny (FR); Goldstein, Léon, 92370 Chaville (FR); Emery, Jean-Yves, 91120 Palaiseau (FR); Dagens, Béatrice, 75014 Paris (FR); Janz, Christopher, 92130 Issy Les Moulineaux (FR); Schilling, Michael, 70499 Stuttgart (DE); Wunstel, Klaus, 71701 Schwieberdinger (DE)
(74) Mandataire: Fournier, Michel

(57) **Abrégé**

L'invention se rapporte à des convertisseurs de longueur d'onde de signaux optiques utilisés dans le domaine des télécommunications, en particulier lors du routage de signaux. Elle a notamment pour objet un convertisseur de longueur d'onde comprenant une structure interférométrique pour fournir un signal optique de sortie (S), dans lequel une première et une seconde branche, comportant au moins un premier amplificateur optique semi-conducteur (OA₁), sont couplées à des amplificateurs optiques semi-conducteurs périphériques d'entrée (OA₁, OA₅) et/ou de sortie (OA₃), ledit convertisseur étant caractérisé en ce que la structure du guide d'onde actif d'au moins un amplificateur périphérique est conçue de telle sorte qu'il présente un rapport surface active à facteur de confinement (S/Γ) supérieur à celui du guide d'onde actif dudit premier amplificateur (OA₁).

## Description

L'invention se rapporte à des systèmes optoélectroniques utilisés pour la transmission optique ou le traitement de données numériques optiques.

Elle se rapporte plus particulièrement à des convertisseurs de longueur d'onde de signaux optiques utilisés, dans le domaine des télécommunications, pour convertir un signal optique transmis, d'une longueur d'onde à une autre longueur d'onde, tout en conservant ses performances.

De tels changements de longueur d'onde sont utilisés en particulier lors du routage des signaux pour résoudre les problèmes de contention.

Dans ces convertisseurs, les informations sont sous la forme de données binaires représentées par des impulsions modulant une onde porteuse optique. Une valeur binaire est donc déterminée en fonction du niveau d'amplitude (ou de puissance) de l'onde optique modulée.

Au cours de la transmission, ce signal peut subir des dégradations qui rendent plus difficile, au niveau des récepteurs, la détection des niveaux hauts et bas du signal reçu.

Dans le domaine de l'amplitude, la qualité d'un signal optique est habituellement définie par au moins deux paramètres : le rapport signal à bruit et le taux d'extinction.

Le rapport signal à bruit est défini comme le rapport de la puissance optique du signal à la puissance du bruit dans une bande de longueur d'onde contenant la longueur d'onde de la porteuse du signal.

Le taux d'extinction est défini comme le rapport des puissances correspondant respectivement aux niveaux hauts et bas du signal. Ce taux doit être suffisamment élevé malgré les variations du signal d'entrée.

Une manière courante pour réaliser des convertisseurs de longueur d'onde consiste à utiliser une structure interférométrique de type Mach-Zehnder ou équivalente.

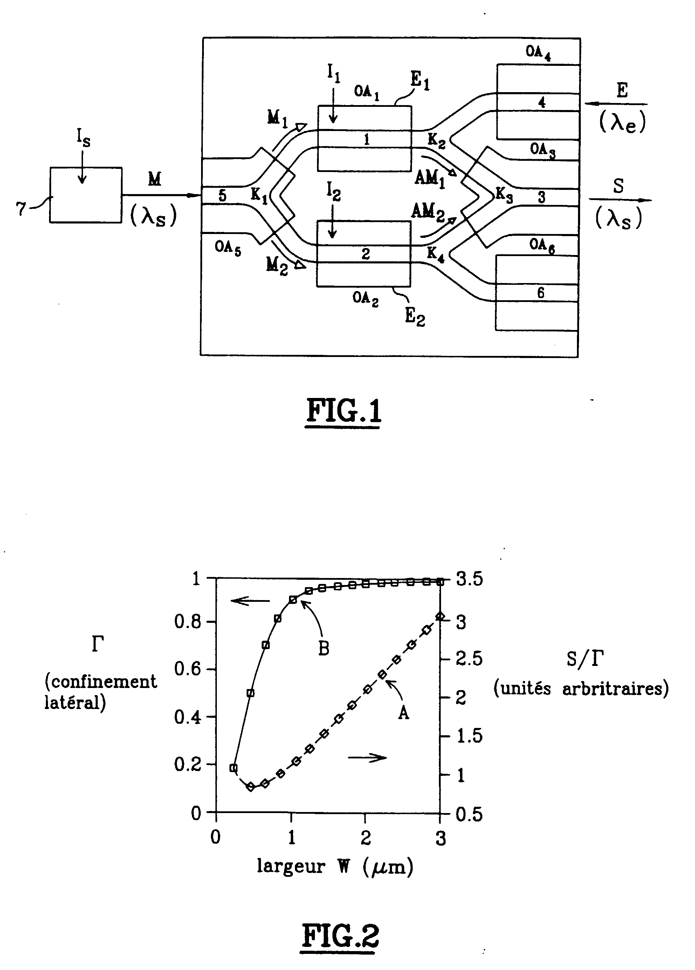

Une telle structure interférométrique est représentée sur la figure 1. Elle est constituée de deux branches guidantes 1 et 2. Au moins une de ces branches est munie d'un amplificateur optique semi-conducteur OA₁. Cependant, en général on préfère placer un deuxième amplificateur optique semi-conducteur OA₂ sur l'autre branche 2 pour des raisons de symétrie. En effet, la présence du deuxième amplificateur optique semi-conducteur OA₂ permet de conserver sensiblement le même niveau d'amplification dans les deux branches de la structure et par conséquent d'avoir des puissances sensiblement identiques en sortie des branches de l'interféromètre.

Un premier coupleur K1 permet de coupler une extrémité de chacune de ces branches à un amplificateur optique semi-conducteur périphérique, encore dénommé amplificateur d'entrée OA₅. Une source laser 7 permet par ailleurs de fournir, à cet amplificateur périphérique 0A₅, une onde porteuse de sortie M de longueur d'onde λS.

Un second coupleur K2 est disposé de façon à coupler l'autre extrémité de la première branche 1 à un autre amplificateur optique semi-conducteur périphérique d'entrée OA₄. Ce coupleur K2 permet l'introduction, dans le premier amplificateur OA₁ d'un signal d'entrée E de longueur d'onde λe ayant été amplifié par l'amplificateur d'entrée OA₄.

Un troisième coupleur K3 relié au coupleur K2, au deuxième amplificateur OA₂, et à un autre amplificateur optique semi-conducteur périphérique OA₃, dit de sortie, est disposé de façon à fournir un signal de sortie S résultant du couplage d'ondes auxiliaires AM₁ et AM₂ fournies respectivement par les premier et deuxième amplificateurs OA₁ et 0A₂. Les ondes AM₁ et AM₂ correspondent aux ondes M₁ et M₂ issues du coupleur K1 et amplifiées respectivement par les amplificateurs OA₁ et 0A₂. Le signal de sortie S, de longueur d'onde λs, est ensuite amplifié par l'amplificateur périphérique de sortie OA₃.

Un autre amplificateur périphérique OA6 est par ailleurs prévu pour respecter la symétrie de la structure et pour permettre le remplacement de l'un des amplificateurs OA₃ ou OA₄ dans le cas d'une éventuelle panne.

Des courants I1 et I2 sont injectés respectivement dans les amplificateurs OA₁ et OA₂, au travers d'électrodes E1 et E2. Le signal de sortie S résulte d'une interférence constructive ou destructrice des ondes AM₁ et AM₂, selon la différence de phase entre les deux branches de l'interféromètre.

Pour obtenir une conversion de longueur d'onde efficace, le seuil de puissance de saturation d'une telle structure interférométrique est fixé relativement bas, ce qui est favorable à la conversion dans les bras de la structure Mach-Zehnder mais défavorable au taux d'extinction dans l'amplificateur de sortie. En effet, lorsque la puissance du signal qui arrive en K3 (figure 1), par exemple, dépasse ce bas seuil de saturation, le gain des niveaux hauts devient inférieur au gain des niveaux bas, si bien que le signal de sortie S subit une compression des niveaux hauts et se trouve par conséquent déformé. Cette déformation peut également se produire sur le signal d'entrée E, ou sur l'onde porteuse de sortie M. Or, si le signal d'entrée E est déformé, ou si l'onde porteuse de sortie M est déformée, alors le signal de sortie S est également dégradé et le taux d'extinction de la structure interférométrique est amoindri.

L'invention a pour but de remédier à ces inconvénients. Elle a pour but, en particulier, de fournir un dispositif convertisseur de longueur d'onde, comprenant une structure interférométrique de type Mach-Zehnder ou équivalente, présentant d'une part un seuil de saturation relativement bas sur ses branches, de manière à permettre une conversion de longueur d'onde efficace, et d'autre part un seuil de saturation relativement haut à la périphérie, c'est-à-dire aux entrées et/ou aux sorties de la structure interférométrique, pour obtenir un signal d'entrée et/ou de sortie non déformé.

La présente invention a plus précisément pour objet un convertisseur de longueur d'onde comprenant une structure interférométrique pour fournir un signal optique de sortie, dans lequel une première et une seconde branche, comportant au moins un premier amplificateur optique semi-conducteur, sont couplées à des amplificateurs optiques semi-conducteurs périphériques d'entrée et/ou de sortie, ledit convertisseur étant caractérisé en ce que la structure du guide d'onde actif d'au moins un amplificateur périphérique est conçue de telle sorte qu'il présente un rapport surface active à facteur de confinement (S/Γ) supérieur à celui du guide d'onde actif dudit premier amplificateur.

Dans une première solution envisagée, le guide d'onde actif dudit (desdits) amplificateur(s) périphérique(s) est plus large que le guide d'onde dudit premier amplificateur.

Dans une deuxième solution envisagée, les guides d'onde actifs des amplificateurs sont enterrées dans une couche de gaine et la couche de gaine dudit (desdits) amplificateur(s) périphérique(s) présente un indice de réfraction différent de l'indice de réfraction de la couche de gaine dudit premier amplificateur, de manière à modifier le facteur de confinement (Γ) de l'onde optique circulant au travers des guides actifs successifs.

De préférence, dans ce cas, le (les) amplificateur(s) périphérique(s) possède(nt) une couche de gaine dont l'indice de réfraction est inférieur à celui de son (leur) guide actif mais supérieur à celui de la couche de gaine du premier amplificateur.

Dans une troisième solution envisagée, le guide d'onde actif dudit (desdits) amplificateur(s) périphérique(s) présente une épaisseur inférieure à celle du guide d'onde actif dudit premier amplificateur.

Dans une quatrième solution envisagée, le guide d'onde actif dudit (desdits) amplificateur(s) périphérique(s) présente une épaisseur supérieure à celle du guide d'onde actif dudit premier amplificateur.

D'autres particularités et avantages de l'invention apparaîtront à la lecture de la description donnée à titre d'exemple illustratif et non limitatif, et faite en référence aux figures annexées qui représentent :
- la figure 1, déjà décrite, un schéma d'une structure interférométrique de type Mach-Zehnder connue à amplificateurs optiques semi-conducteurs périphériques,
- la figure 2, deux courbes représentant d'une part la variation du rapport surface active à facteur de confinement (S/Γ) en fonction de la largeur (W) du guide actif, et d'autre part la variation du facteur de confinement (Γ) en fonction de la largeur (W) du guide actif,
- la figure 3, un schéma d'un convertisseur de longueur d'onde selon un premier mode de réalisation,
- les figures 4A à 4C, des courbes de variation, respectivement de la puissance de sortie (Ps), du taux d'extinction (TE) et du rapport signal à bruit (S/B) en fonction du courant (I) injecté et de la largeur du guide d'onde actif d'un amplificateur périphérique,
- la figure 5, un schéma d'un convertisseur de longueur d'onde selon un deuxième mode de réalisation,
- les figures 6A à 6C, des courbes de variation, respectivement de la puissance de sortie (Ps), du taux d'extinction (TE) et du rapport signal à bruit (S/B) en fonction du courant (I) injecté et de l'indice de réfraction de la couche de gaine d'un amplificateur périphérique,
- les figures 7A à 7C, un schéma respectivement d'une vue en perspective et de deux vues en coupe d'un convertisseur de longueur d'onde selon un troisième mode de réalisation,
- la figure 8, un schéma d'une structure de type Michelson à laquelle s'applique l'invention.

Dans tout le reste de la description, les mêmes éléments portent les mêmes références.

Pour pouvoir effectuer des conversions de longueur d'onde efficaces, les amplificateurs optiques semi-conducteurs OA₁ et OA₂ situés sur les branches des interféromètres de type Mach-Zehnder ou équivalent doivent présenter un seuil de saturation relativement bas.

Au contraire, pour que le taux d'extinction soit optimum et pour éviter que le signal d'entrée E et l'onde porteuse de sortie M ne soient eux aussi déformés, il est nécessaire que les amplificateurs périphériques OA₃, OA₄ et OA₅ présentent un seuil de saturation le plus élevé possible. En effet, un seuil de saturation élevé permet d'éviter une compression des niveaux hauts d'un signal, c'est-à-dire une déformation du signal.

La présente invention permet de fournir un convertisseur de longueur d'onde dans lequel les deux types d'amplificateurs optiques semi-conducteurs OA₁, OA₂ d'une part et OA₃, OA₄, OA₅ d'autre part, sont intégrés.

De manière avantageuse, la puissance de saturation d'un amplificateur optique semi-conducteur est proportionnelle au rapport surface active à facteur de confinement S/Γ. La surface active S est définie comme étant le produit de la largeur W du guide d'onde actif de l'amplificateur par son épaisseur d. Le facteur de confinement Γ correspond à la fraction de la puissance de l'onde optique qui se trouve dans la couche active.

Pour augmenter le seuil de saturation d'un amplificateur optique semi-conducteur par rapport à celui des premier et deuxième amplificateurs OA₁, OA₂, situés dans les branches 1 et 2 de la structure interféométrique, il est donc nécessaire d'augmenter le rapport S/Γ par rapport à celui du guide actif des premier et deuxième amplificateurs OA₁ et OA₂.

Pour cela, une première solution consiste à élargir les rubans de couche active 3,4,5 des amplificateurs de sortie OA₃ et/ou d'entrée OA₄, OA₅. En effet, l'élargissement de la taille du guide d'onde actif entraîne une modification à la fois de la surface active S et du facteur de confinement Γ.

La figure 2 illustre la manière dont la variation de la largeur du guide actif d'un amplificateur influe sur le facteur de confinement Γ de ce guide et sur le rapport S/Γ. La courbe A indique que le rapport S/Γ croît avec la largeur W du guide actif. En revanche, si on diminuait très fortement la largeur W du guide actif, au-dessous d'un seuil égal à 0,5 µm selon l'exemple donné, on pourrait avoir une légère remontée de ce rapport S/Γ. Il est cependant très difficile de contrôler la technologie de fabrication pour réaliser des rubans de couche active de largeur comprise entre environ 0,1 et 0,5 µm.

La courbe B, quant-à elle, indique que le facteur de confinement Γ augmente très vite avec la largeur W du guide actif, lorsque cette largeur est comprise entre environ 0,1 et 1µm ; puis il tend vers la valeur 1 pour une largeur W supérieure à 1µm. En conséquence, lorsque l'on élargit la largeur d'un ruban à une valeur comprise entre par exemple 2 et 3 µm, le facteur de confinement Γ ne varie pratiquement pas alors que la surface active S, et donc le rapport S/Γ, augmente beaucoup.

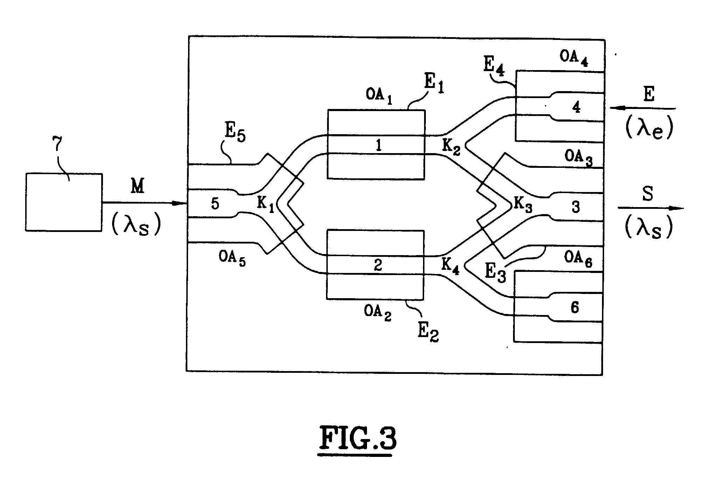

Le schéma de la figure 3 représente un convertisseur de longueur d'onde dans lequel la largeur des guides d'onde actifs des amplificateurs périphériques d'entrée 0A₅, 0A₄ et de sortie OA₃ a été augmentée par rapport à la largeur des guides actifs des premier et deuxième amplificateurs OA₁ et OA₂ situés sur les branches de l'interféromètre.

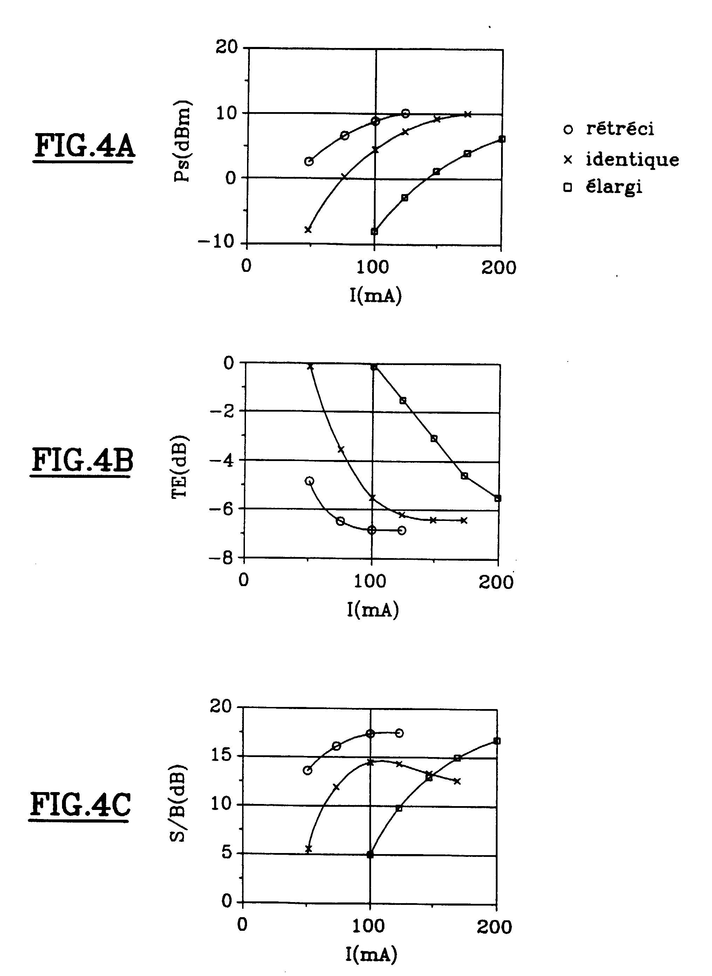

Les courbes des figures 4A à 4C permettent de comparer les résultats obtenus à partir d'amplificateurs d'entrée et/ou de sortie dans lesquels la largeur des rubans de couche active est respectivement identique à la largeur des rubans de couche active des premier et deuxième amplificateurs OA₁ et OA₂, rétrécie et élargie. La largeur classique des rubans est par exemple de 1,2 µm. Lorsqu'ils sont rétrécis les rubans présentent par exemple une largeur de O,5 µm et lorsqu'ils sont élargis ils présentent par exemple une largeur de 2,8 µm.

Le but à atteindre est d'obtenir un niveau de puissance de sortie Ps constant sans détériorer le taux d'extinction TE ni le rapport signal à bruit S/B.

Pour cela, la structure du guide d'onde actif d'au moins un amplificateur périphérique est modifiée. De préférence, c'est la structure du guide de l'amplificateur de sortie qui est prioritairement modifiée pour maintenir un bon taux d'extinction du signal de sortie S, et éviter ainsi toute déformation de ce signal. La structure des autres amplificateurs périphériques d'entrée OA₄ puis OA₅ peut ensuite être modifiée afin d'éviter toute déformation du signal d'entrée E et de l'onde porteuse de sortie M.

Ces courbes indiquent que, pour une même puissance de sortie Ps, on obtient le meilleur taux d'extinction TE et le meilleur rapport signal à bruit S/B lorsque la taille du guide d'onde actif est élargie. L'élargissement du guide d'onde peut permettre le guidage de modes asymétriques mais ceux-ci peuvent être filtrés par le coupleur K3 (figures 1 et 3).

Par conséquent, il est préférable d'élargir la taille latérale du guide d'onde actif des amplificateurs périphériques pour augmenter la puissance de saturation et maintenir un taux d'extinction optimum.

Ce mode de réalisation d'un convertisseur de longueur d'onde est en outre très simple à mettre en oeuvre puisqu'il ne nécessite pas d'étapes de technologie supplémentaires au cours de sa fabrication. Seule la forme du masque utilisé pour réaliser la gravure des guides d'ondes actifs change.

Selon une variante, il est également possible d'envisager une modification de la structure des guides actifs non seulement à la périphérie, c'est à dire au niveau des amplificateurs d'entrée OA₄, OA₅ et/ou de sortie OA₃, mais aussi jusqu'au delà du coupleur K3 d'une part, et au delà du coupleur K1 d'autre part. En effet, les électrodes E3, E4, E5 des amplificateurs périphériques sont longues et se prolongent au delà des coupleurs K3 d'une part et K1 d'autre part. Le courant est donc injecté tout le long de ces électrodes et des guides actifs. En conséquence, les modifications de la structure des guides actifs peuvent être effectuées juste avant l'entrée dans les branches 1 et 2 de l'interféromètre et dès la sortie de ces branches, et pas seulement aux extrémités de la structure interférométrique.

Il existe encore d'autres solutions qui peuvent être envisagées pour modifier le rapport S/Γ. Ainsi, un deuxième mode de réalisation d'un convertisseur de longueur d'onde selon l'invention consiste à modifier l'indice de réfraction latéral, d'au moins un amplificateur périphérique, c'est-à-dire l'indice de réfraction de la couche de gaine dans laquelle le guide d'onde actif de l'amplificateur périphérique se trouve enterré.

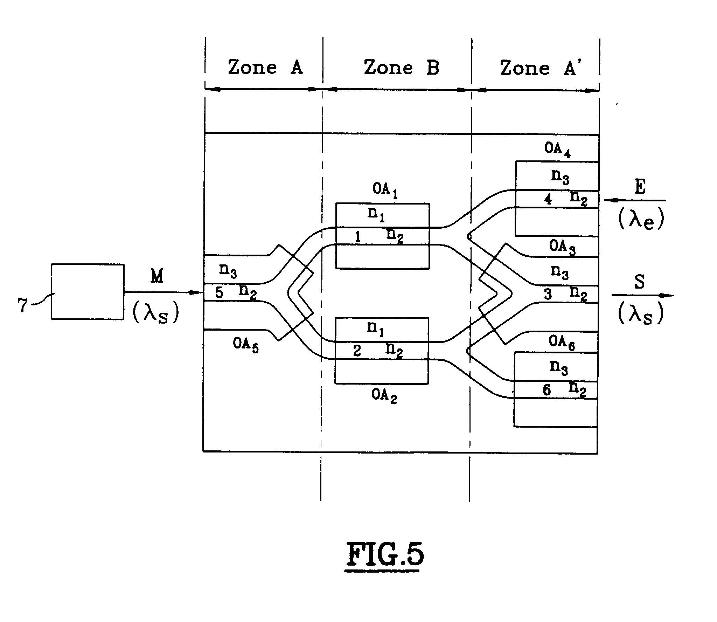

Le schéma de la figure 5, illustre ce mode de réalisation. Les guides d'onde actifs ont tous le même indice de réfraction n₂ supérieur à celui de la couche de gaine qui les enterre. En revanche la couche de gaine des amplificateurs périphériques OA3, OA4, OA5 présente un indice de réfraction n₃ différent de celui n₁ de la couche de gaine des premier et deuxième amplificateurs OA1 et OA2.

Dans ce cas, l'indice de réfraction latéral est modifié au moment de la fabrication du convertisseur. En général, la couche de gaine d'un amplificateur est réalisée dans du phosphure d'indium (InP). Pour modifier l'indice de réfraction de cette couche de gaine il suffit, lors de la fabrication, de remplacer le matériau InP par un autre matériau, tel que InGaAsP par exemple, présentant des propriétés similaires à la fois à celles de l'InP et à celles du ruban de couche active. Ce remplacement est effectué après la gravure du guide d'onde actif, par épitaxie d'une couche de gaine d'InGaAsP destinée à enterrer le guide d'onde, au lieu d'une couche de gaine d'InP.

Cependant, cette modification de l'indice latéral de réfraction est plus difficile à réaliser que l'élargissement des guides. En effet, les couches de gaine des amplificateurs OA₃, OA₄, OA₅ n'ont alors pas la même composition que celles des premier OA₁ et deuxième OA₂ amplificateurs. La structure interférométrique présente donc une première zone B centrale dans laquelle la couche de gaine possède un indice de réfraction n₁ différent de celui n₃ de la couche de gaine des deux autres zones A et A' situées de part et d'autre de la zone B. En conséquence, des étapes supplémentaires de gravure et de reprise d'épitaxie sont nécessaires pour réaliser les trois zones A, B, et A' de la structure interférométrique, ce qui complique grandement le procédé de fabrication du convertisseur.

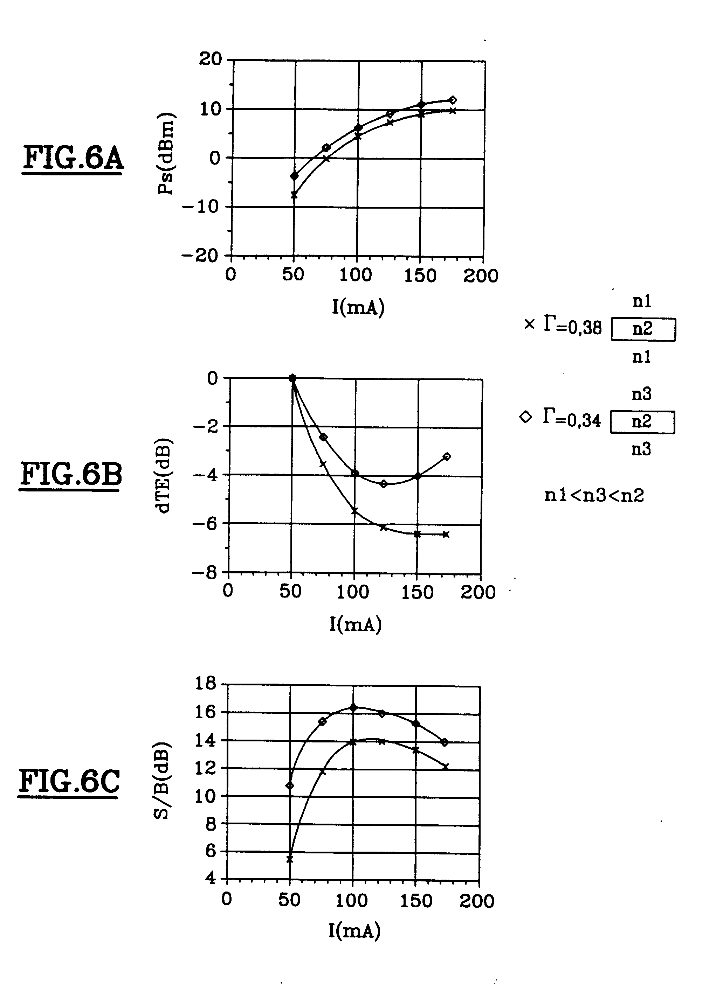

Les courbes des figures 6A à 6C permettent de comparer les résultats obtenus à partir de deux types d'amplificateurs périphériques. Le premier type d'amplificateur possède une couche de gaine présentant un indice de réfraction n₁ inférieur à l'indice de réfraction n₂ du guide actif. Le deuxième type d'amplificateur possède une couche de gaine présentant un indice de réfraction n₃ supérieur à l'indice n₁ de la couche de gaine du premier type d'amplificateur, mais inférieur à l'indice n₂ de son guide d'onde actif. Ces courbes permettent de mettre en évidence que pour un niveau de puissance de sortie Ps constant, c'est l'amplificateur présentant l'indice de réfraction latéral le plus élevé (n₃), c'est-à-dire un confinement plus faible, qui permet d'obtenir le meilleur taux d'extinction TE et le meilleur rapport signal à bruit S/B.

Un troisième mode de réalisation d'un convertisseur de longueur d'onde selon l'invention consiste à modifier les dimensions verticales, c'est-à-dire l'épaisseur du guide d'onde actif d'au moins un des amplificateurs OA₁, OA₂ situés dans les branches 1 et 2 de l'interféromètre, ou des amplificateurs périphériques d'entrée OA₄, OA₅ et/ou de sortie OA₃. Ainsi, lorsque la structure interférométrique est réalisée par un empilement de couches multiples définissant une structure à puits quantiques, il peut être nécessaire de diminuer le nombre de puits quantiques au niveau d'un guide d'onde actif pour augmenter, ou diminuer selon le cas, le rapport S/Γ de ce guide. En effet, la gravure des puits quantiques entraîne une variation à la fois de la surface active S et du facteur de confinement Γ du guide actif.

La variation du rapport S/Γ en fonction de l'épaisseur de la couche active est analogue à la variation de ce même rapport S/Γ en fonction de la largeur de la couche active représentée sur la figure 2. Cependant, dans ce cas, le rapport S/Γ atteint un minimum pour une valeur d'épaisseur de la couche active de l'ordre de 0,2 µm, qui est facile à contrôler technologiquement et couramment utilisée. Il se peut donc que les guides d'onde actifs initialement réalisés présentent une épaisseur inférieure ou supérieure à ce minimum de 0,2µm. La gravure ne se fera donc pas sur les mêmes types de guides selon la valeur initiale de leur épaisseur.

Dans le cas où l'épaisseur des guides actifs est inférieure ou égale à ce minimum de 0,2µm, il faut donc réaliser une gravure sur les guides d'onde actifs du (des) amplificateur(s) périphérique(s).

Ainsi, par exemple, un nombre de puits quantiques égal à 15 suffit pour obtenir un seuil de saturation assez bas pour les premier OA₁ et deuxième OA₂ amplificateurs situés dans les branches 1 et 2 de l'interféromètre. En revanche, pour obtenir un seuil de saturation plus élevé des amplificateurs périphériques, une partie des couches minces formant la structure à puits quantiques doit être supprimée par gravure par exemple. Ainsi, sur quinze puits quantiques par exemple, dix d'entre-eux sont gravés pour augmenter de manière significative le seuil de saturation.

Cette modification de l'épaisseur d des guides est effectuée de préférence après les avoir gravés sous forme de rubans de largeur W déterminée.

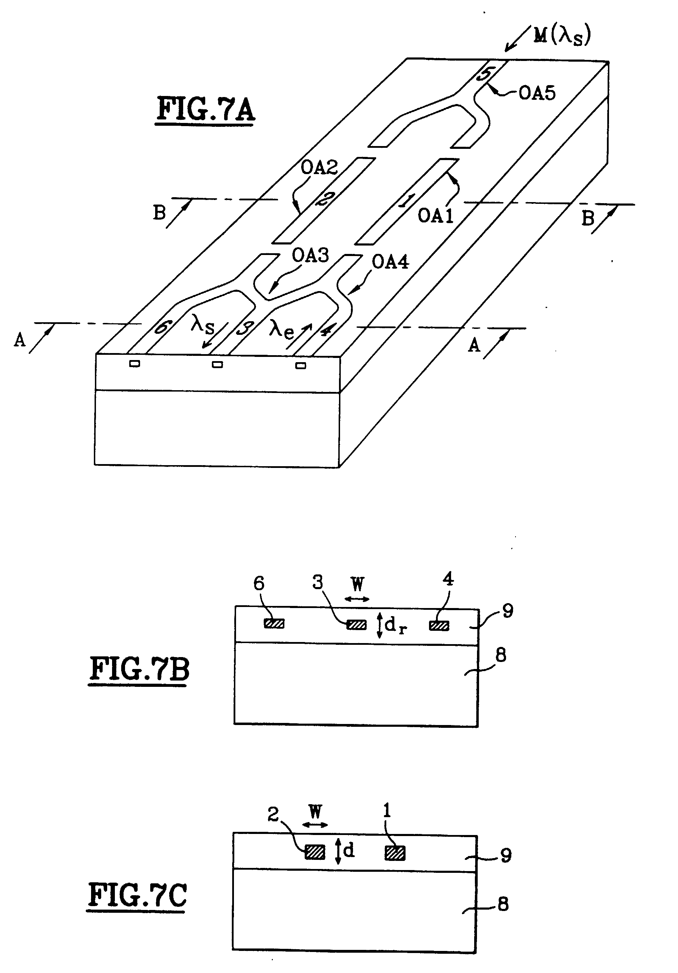

Cette gravure des guides d'onde actifs des amplificateurs périphériques peut également être effectuée dans le cas de structures dites "bulk" en terminologie anglo-saxonne. La variation locale de l'épaisseur des guides actifs permet donc de modifier le rapport S/Γ. Les différences d'épaisseur d des guides actifs des amplificateurs périphériques par rapport aux premier OA₁ et deuxième OA₂ amplificateurs sont illustrées sur les figures 7A à 7C.

La figure 7A représente un schéma d'une vue en perspective d'un convertisseur de longueur d'onde selon l'invention. La référence 8 désigne le substrat sur lequel a été réalisée la structure interférométrique et la référence 9 désigne la couche de gaine enterrant les guides actifs de la structure.

La figure 7B représente un schéma d'une vue en coupe transversale selon AA du convertisseur de la figure 7A. Ce schéma en coupe permet de mettre en évidence notamment les guides actifs 3 et 4 des amplificateurs d'entrée OA₄ et de sortie OA₃. Ces guides présentent une largeur W par exemple égale à 1,2 µm et une épaisseur réduite dr de l'ordre de 0,133 µm. La figure 7C, quant à elle, représente un schéma d'une vue en coupe transversale selon BB du convertisseur de la figure 7A. Ce schéma en coupe permet notamment de mettre en évidence les guides actifs des premier OA₁ et deuxième OA₂ amplificateurs optiques situés respectivement sur les branches 1 et 2 de l'interféromètre. Ces guides actifs présentent une largeur W identique à celle des guides actifs situés en périphérie de la structure interféromètrique c'est-à-dire, dans l'exemple, une largeur égale à 1,2 µm. En revanche leur épaisseur d est supérieure à celle des guides périphériques. Dans l'exemple cité elle est de préférence égale à 0,2 µm.

Dans le cas contraire où l'épaisseur intiale des guides actifs est supérieure à la valeur minimum de 0,2µm donnée à titre d'exemple, ce ne sont plus les guides actifs des amplificateurs périphériques qui sont gravés mais ceux des premier et deuxième amplificateurs OA₁ et OA₂ situés dans les branches 1 et 2 de l'interféromètre. Dans ce cas, le rapport S/Γ des guides correspondant aux premier et deuxième amplificateurs OA₁ et OA₂ devient inférieur à celui des amplificateurs périphériques OA₃, OA₄ et OA₅. Cette modification de l'épaisseur des guides des amplificateurs OA₁ et OA₂ peut être réalisée de manière analogue à celle décrite précédemment pour les amplificateurs périphériques.

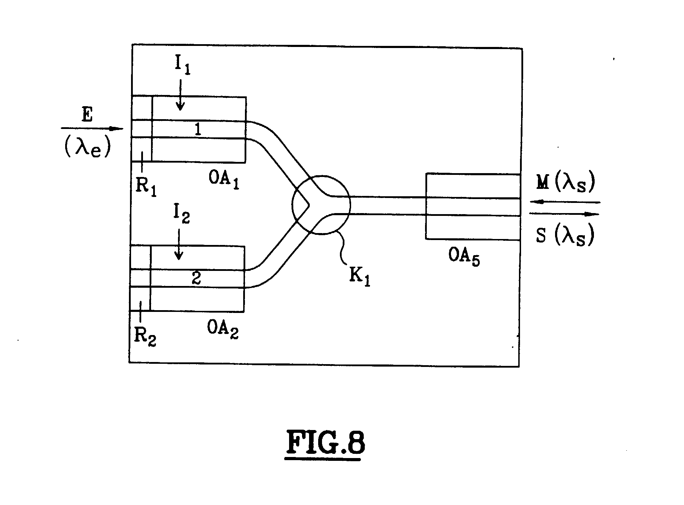

La figure 8 représente une autre structure de type Michelson équivalente à la précédente à laquelle s'applique l'invention. Selon cette variante, les deux amplificateurs OA₁ et OA₂ sont couplés par une seule de leurs extrémités, les faces opposées étant munies d'un revêtement réfléchissant R1, R2. Le signal d'entrée modulant E est injecté dans le premier amplificateur OA₁ par l'intermédiaire de la face R1 et l'onde porteuse de sortie M est injectée dans les deux amplificateurs OA₁ et OA₂ par les faces opposées aux faces R1 et R2, par l'intermédiaire d'un coupleur K1 permettant de coupler une extrémité de chacune des branches 1 et 2 à un amplificateur optique semi-conducteur périphérique OA₅. Un signal de sortie S, de longueur d'onde λₛ, résultant du couplage d'ondes auxiliaires fournies par les premier et deuxième amplificateurs OA₁ et OA₂, est ensuite amplifié par l'amplificateur périphérique OA₅.

## Revendications

1. Convertisseur de longueur d'onde comprenant une structure interférométrique pour fournir un signal optique de sortie (S), dans lequel une première et une seconde branche, comportant au moins un premier amplificateur optique semi-conducteur (OA₁), sont couplées à des amplificateurs optiques semi-conducteurs périphériques d'entrée (OA₁, OA₅) et/ou de sortie (OA₃), ledit convertisseur étant caractérisé en ce que la structure du guide d'onde actif d'au moins un amplificateur périphérique est conçue de telle sorte qu'il présente un rapport surface active à facteur de confinement (S/Γ) supérieur à celui du guide d'onde actif dudit premier amplificateur (OA₁).

2. Convertisseur de longueur d'onde selon la revendication 1, caractérisé en ce que le guide d'onde actif dudit (desdits) amplificateur(s) périphérique(s) est plus large que le guide d'onde actif dudit premier amplificateur (OA₁).

3. Convertisseur de longueur d'onde selon la revendication 1, caractérisé en ce que les guides d'onde actifs des amplificateurs sont enterrés dans une couche de gaine et en ce que la couche de gaine dudit (desdits) amplificateur(s) périphérique(s) présente un indice de réfraction (n₃) différent de l'indice de réfraction (n₁) de la couche de gaine dudit premier amplificateur (OA₁), de manière à modifier le facteur de confinement (Γ) de l'onde optique circulant au travers des guides actifs successifs.

4. Convertisseur de longueur d'onde selon la revendication 3, caractérisé en ce que ledit (lesdits) amplificateur(s) périphérique(s) possède(nt) une couche de gaine dont l'indice de réfraction (n₃) est inférieur à l'indice de réfraction (n₂) de son (leur) guide actif mais supérieur à l'indice de réfraction (n₁) de la couche de gaine dudit premier amplificateur (OA₁).

5. Convertisseur de longueur d'onde selon la revendication 1, caractérisé en ce que le guide d'onde actif dudit (desdits) amplificateur(s) périphérique(s) présente une épaisseur inférieure à celle du guide d'onde actif dudit premier amplificateur (OA₁).

6. Convertisseur de longueur d'onde selon la revendication 5, caractérisé en ce que les guides d'onde actifs des amplificateurs contiennent des couches multiples à puits quantiques, et en ce que le nombre de puits quantiques du guide d'onde actif dudit (desdits) amplificateur(s) périphérique(s) est inférieur au nombre de puits quantiques du guide d'onde dudit premier amplificateur (OA₁).

7. Convertisseur de longueur d'onde selon la revendication 1, caractérisé en ce que le guide d'onde actif dudit (desdits) amplificateur(s) périphérique (s) présente une épaisseur supérieure à celle du guide d'onde actif dudit premier amplificateur (OA₁).

8. Convertisseur de longueur d'onde selon la revendication 7, caractérisé en ce que les guides d'onde actifs des amplificateurs contiennent des couches multiples à puits quantiques, et en ce que le nombre de puits quantiques du guide d'onde actif dudit (desdits) amplificateur(s) périphérique(s) est supérieur au nombre de puits quantiques du guide d'onde dudit premier amplificateur (OA₁).
